# EUROPÄISCHE PATENTSCHRIFT

(11) **EP 0 419 786 B1**
(45) Veröffentlichungstag und Bekanntmachung des Hinweises auf die Patenterteilung: **06.04.1994**
(21) Anmeldenummer: 90113821.4
(22) Anmeldetag: 19.07.1990
(51) Int. Cl.: A01F 7/06, A01F 12/39

(54) **Selbstfahrender Mähdrescher**
Self-propelled combine harvester
Moissonneuse-batteuse automotrice

(30) Priorität: 28.09.1989 DE 3932370
(43) Veröffentlichungstag der Anmeldung: 03.04.1991
(73) Patentinhaber: Claas OHG beschränkt haftende offene Handelsgesellschaft, D-33426 Harsewinkel (DE)
(72) Erfinder: Claas, Helmut, Dr., D-4834 Harsewinkel (DE); Heidjann, Franz, Dipl.-Ing., D-4834 Harsewinkel (DE); Tophinke, Franz, D-4834 Harsewinkel (DE)

(56) Entgegenhaltungen:
- DE-A- 2 830 162
- DE-A- 3 139 933
- US-A- 4 291 709
- US-A- 4 739 773

## Beschreibung

Die Erfindung betrifft einen selbstfahrenden Mähdrescher mit mindestens zwei nach dem Axialflußsystem arbeitenden nebeneinander angeordneten gleichsinnig antreibbaren Nachdresch- und Abscheiderotoren, die von einem einzigen Gehäuse umgeben sind, welches oberhalb jeder Trommel als Leitwand mit Führungsleisten für das durchfließende Gut ausgebildet sind.

Ein solcher Mähdrescher ist beispielsweise aus der DE PS 3023756 bekannt. Als nachteilig hat sich bei derartigen Mähdreschern mit nach dem Axialflußsystem arbeitender Dresch- und Trenneinrichtung die nicht ganz zufriedenstellende Restkornausscheidung herausgestellt. Der vorliegenden Erfindung liegt daher das Problem zugrunde, einen Mähdrescher der eingangs näher bezeichneten Art so auszubilden, daß er die an ihn zu stellende Forderung nach möglichst vollständiger Restkornausscheidung aus der Strohmatte erfüllt.

Das wird dadurch erreicht, daß das die Rotoren umgebende Gehäuse oberhalb der Rotoren erweitert ist. Hierdurch entsteht ein Raum, in dem das aus einem Rotor zugeförderte Stroh expandieren kann, bevor es wieder von dem zweiten Rotor ergriffen wird. Durch diese Maßnahme ist es möglich, daß auch die in der Mitte der Strohmatte befindlichen Restkörner nach außen gelangen können. Auf vorteilhafte Weise weist der obere Wandungsteil des Gehäuses einen bogenförmigen Verlauf auf. Es werden somit keine Ecken und Kanten gebildet, vor denen sich die Strohmatte stauen kann. Es hat sich als sehr günstig erwiesen, das obere Wandungsteil so auszubilden, daß zwischen dem das expandierte Gut ergreifenden Rotor und dem Wandungsteil ein den Guteinzug begünstigender relativ großer Einzugskeil gebildet wird. Um auch noch im Expansionsraum eine gute Führung des Strohs zu gewährleisten, entspricht die Hohe der Führungsleisten oberhalb der Rotoren in etwa der Höhe des Expansionsraumes. Nach einem weiteren Merkmal der Erfindung verläuft die untere Begrenzung jeder Führungsleiste in einem Abstand zum Hüllkreis der Rotoren, der in etwa dem Abstand des Hüllkreises der Rotoren zu den seitlichen Begrenzungswandungsteilen des Gehäuses entspricht. Um eine möglichst gleichmäßige Ausbildung des Rotorgehäuses erzielen zu können, haben die Führungsleisten in ihrem Bereich oberhalb der Rotoren die Form eines Kreisabschnitts.

Im folgenden soll die Erfindung anhand eines Ausführungsbeispieles und mehrerer dieses schematisch darstellen der Figuren näher erläutert werden. Dabei zeigt:

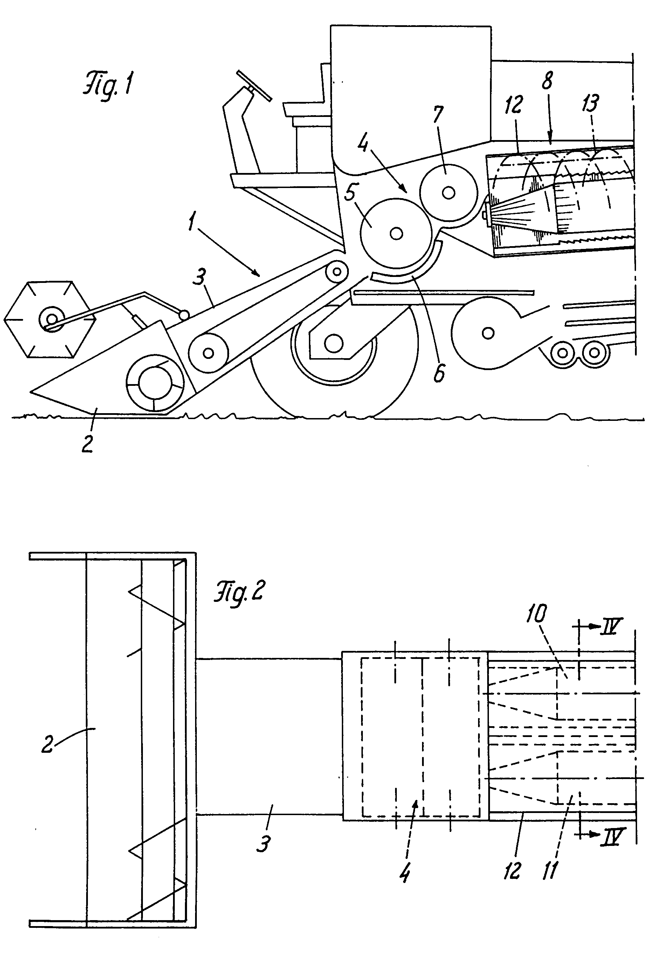

- Figur 1: den vorderen Teil eines selbstfahrenden Mähdrescher,
- Figur 2: eine Draufsicht auf den in Figur 1 dargestellten Mähdrescher,

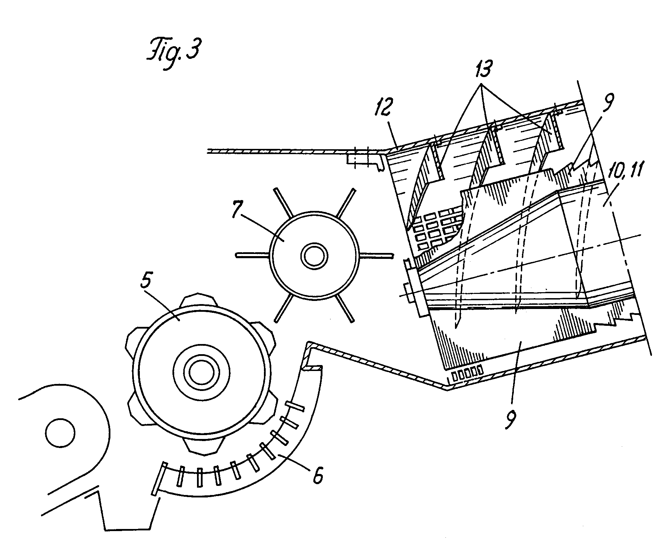

- Figur 3: einen Teil des in Figur 1 dargestellten Mähdreschers in vergrößerter und teilweise perspektivischer Darstellung und
- Figur 4: eine Schnittdarstellung nach der Linie IV-IV in Figur 2.

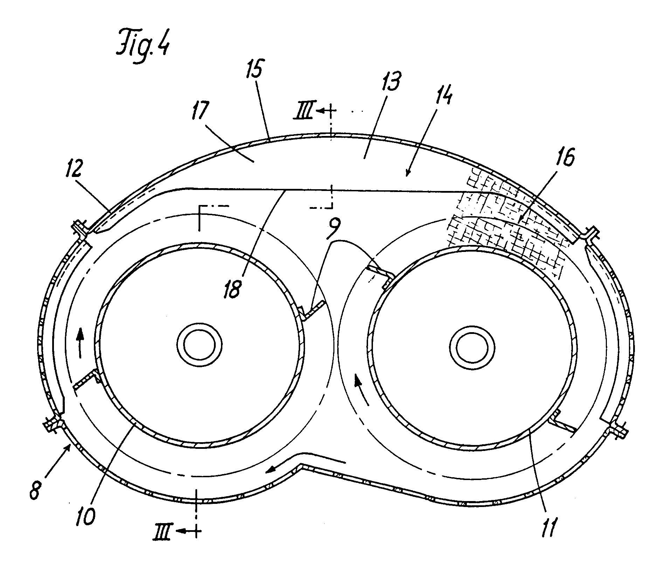

Mit 1 ist der vordere Teil eines selbstfahrenden Mähdreschers bezeichnet, der in ansich bekannter Weise mit einer vorderen Schneiderksmulde 2 und einem sich daran anschließenden Schrägfördererkanal 3 ausgerüstet ist. Von letzterem aus gelangt das Erntegut zu einem Tangentialdreschwerk 4, welches aus einer Dreschtrommel 5 und einem diesem zugeordneten Dreschkorb 6 besteht. Das größtenteils schon ausgedroschene Stroh wird dann von einer Übergabetrommel 7 stirnseitig einer nach dem Axialflußsystem arbeitenden Nachdresch- und Trenneinrichtung 8 übergeben. Diese Nachdresch- und Trenneinrichtung 8 besteht im wesentlichen aus 2 parallel in Fahrtrichtung zueinander verlaufenden mit Leiste 9 versehenen Rotoren 10 und 11, die im Gutaufnahmebereich kegelstumpfförmig ausgebildet sind. Beide Rotoren sind im Uhrzeigersinn antreibbar und von einem gemeinsamen Gehäuse 12 umgeben, das bereichsweise gelocht ist. Zwecks Förderung des Gutstromes ist das Gehäuse 12 im Inneren mit gehäusefesten Führungsleisten 13 besetzt, die mit Abstand zueinander und entgegen der Fahrtrichtung betrachtet schräg nach hinten verlaufen. Wie die Figur 4 erkennen läßt, ist das Gehäuse 12 im oberen Bereich erweitert, so daß oberhalb der Rotoren 10 und 11 ein Raum 14 gebildet ist, in dem das vom linken Rotor 10 nach oben geschleuderte Gut expandieren kann, woraufhin es dann vom rechten Rotor 11 erfaßt und wieder komprimiert wird. Durch diese Maßnahme wird die Restkornausscheidung wesentlich begünstigt, da auch die im Inneren der transportierten Strohmatte befindlichen Restkörner nach außen gelangen können. Weil der obere Wandungsteil 15 des Gehäuses 12 in einem großen Bogen verläuft, entsteht zwischen dem Rotor 11 und dem Wandungsteil 15 ein großer Einlaufkeil 16, wodurch der Einzug der expandierten Strohmatte durch den Rotor 11 gewährleistet ist. Zwecks einwandfreier Führung der Strohmatte durch den Expansionsraum 14 sind die Führungsleisten 13 zur Form eines Kreisabschnitts 17 verbreitert, dessen Sehne 18 mit geringem Abstand oberhalb der Hüllkreise der Rotoren 10 und 11 verläuft.

## Patentansprüche

1. Selbstfahrender Mähdrescher mit mindestens zwei nach dem Axialflußsystem arbeitenden nebeneinander angeordneten gleichsinnig antreibbaren Nachdresch-und Abscheiderotoren (10 und 11), die von einem einzigen Gehäuse (12) umgeben sind, das oberhalb jeder Rotor als Leitwand (15) mit Führungsleisten (13) für das durchfließende Gut ausgebildet sind,
**dadurch gekennzeichnet**,
daß das Gehäuse (12) oberhalb der Rotoren (10 und 11) erweitert ist.

2. Selbstfahrender Mähdrescher nach Anspruch 1,
**dadurch gekennzeichnet**,
daß der obere Wandungsteil (15) des Gehäuses (12) einen bogenförmigen Verlauf aufweist.

3. Selbstfahrender Mähdrescher nach den Ansprüchen 1 und 2,
**dadurch gekennzeichnet**,
daß zwischen dem das Gut zuerst empfangenden Rotor (11) und dem Wandungsteil (15) ein den Guteinzug begünstigender Einzugskeil (16) gebildet ist.

4. Selbstfahrender Mähdrescher nach den Ansprüchen 1 bis 3,
**dadurch gekennzeichnet**,
daß die Höhe der Führungsleisten (13) oberhalb der Rotoren (10 und 11) in etwa der Höhe des Expansionsraumes (14) entspricht.

5. Selbstfahrender Mähdrescher nach den Ansprüchen 1 bis 4,
**dadurch gekennzeichnet**,
daß die untere Begrenzung jeder Führungsleiste 13 oberhalb der Rotoren in einem Abstand zum Hüllkreis der Rotoren (10 und 11) verläuft, der in etwa dem Abstand des Hüllkreises der Rotoren (10 und 11) zu den seitlichen Begrenzungswandungsteilen des Gehäuses (12) entspricht.

6. Selbstfahrender Mähdrescher nach den Ansprüchen 1 bis 5,
**dadurch gekennzeichnet**,
daß die Führungsleisten (13) in ihrem Bereich oberhalb der Rotoren (10 und 11) die Form eines Kreisabschnitts haben.

## Claims

1. A self-propelled combine harvester having at least two post-threshing and separating rotors (10 and 11) which operate on the basis of the axial flow system and which are arranged one beside the other and which can be driven in the same direction and which are surrounded by a single housing (12) which above each rotor is in the form of a guide wall (15) with guide bars (13) for the material flowing therethrough, characterised in that the housing (12) is enlarged above the rotors (10 and 11).

2. A self-propelled combine harvester according to claim 1 characterised in that the upper wall portion (15) of the housing (12) is of an arcuate configuration.

3. A self-propelled combine harvester according to claims 1 and 2 characterised in that formed between the wall portion (15) and the rotor (11) which first receives the material is a draw-in wedge (16) which promotes the draw-in effect on the material.

4. A self-propelled combine harvester according to claims 1 to 3 characterised in that the height of the guide bars (13) above the rotors (10 and 11) approximately corresponds to the height of the expansion chamber (14).

5. A self-propelled combine harvester according to claims 1 to 4 characterised in that the lower boundary of each guide bar (13) above the rotors extends at a spacing relative to the envelope circle of the rotors (10 and 11), which spacing approximately corresponds to the spacing of the envelope circle of the rotors (10 and 11) relative to the lateral boundary wall portions of the housing (12).

6. A self-propelled combine harvester according to claims 1 to 5 characterised in that the guide bars (13) are in the form of a portion of a circle in their region above the rotors (10 and 11).

## Revendications

1. Moissonneuse-batteuse automotrice comprenant au moins deux rotors de battage suplémentaire et de séparation entraînés en sens contraires, disposés l'un à côté de l'autre et fonctionnant selon le système du flux axial, qui sont enfermés dans un unique logement (12) constitué au-dessus de chaque rotor sous forme d'une paroi déflectrice (15) avec des plaques de guidage (13) pour le produit qui s'y écoule, caractérisée en ce que le logement (12) va en s'élargissant au-dessus des rotors (10 et 11).

2. Moissonneuse-batteuse automotrice selon la revendication 1, caractérisée en ce que la partie de paroi supérieure (15) du logement (12) est de forme arquée.

3. Moissonneuse-batteuse automotrice selon les revendications 1 et 2, caractérisée en ce qu'un passage d'introduction en forme de coin (16) qui favorise l'entrée du produit est constitué entre le rotor (11) qui est le premier à recevoir le produit et la partie de paroi (15).

4. Moissonneuse-batteuse automotrice selon les revendications 1 à 3, caractérisée en ce que la hauteur des plaques de guidage (13) au-dessus des rotors (10 et 11) correspond sensiblement à la hauteur de l'enceinte d'expansion (14).

5. Moissonneuse-batteuse automotrice selon les revendications 1 à 4, caractérisée en ce que la limite inférieure de chaque plaque de guidage (13) au-dessus des rotors est située à une distance par rapport au cercle d'enveloppe des rotors (10 et 11) qui correspond sensiblement à la distance entre le cercle d'enveloppe des rotors (10 et 11) et les parties de paroi limites latérales du logement (12).

6. Moissonneuse-batteuse automotrice selon les revendications 1 à 5, caractérisée en ce que les plaques de guidage (13) ont la forme d'une section de cercle dans leur région située au-dessus des rotors (10 et 11).
